(11) **EP 2 147 546 B1**

(12) **EUROPEAN PATENT SPECIFICATION**

(45) Date of publication and mention
of the grant of the patent:
**29.09.2010 Bulletin 2010/39**

(51) Int Cl.:
**H04N 5/14** (2006.01)

(21) Application number: **08751126.7**

(22) Date of filing: **05.05.2008**

(86) International application number:
**PCT/IB2008/051734**

(87) International publication number:
**WO 2008/135945 (13.11.2008 Gazette 2008/46)**

(54) **DETECTING A TRANSITION BETWEEN VIDEO SEGMENTS**

ERKENNUNG EINES ÜBERGANGS ZWISCHEN VIDEOSEGMENTEN

DÉTECTION D'UNE TRANSITION ENTRE DES SEGMENTS VIDÉO

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **08.05.2007 EP 07107666**

(43) Date of publication of application:
**27.01.2010 Bulletin 2010/04**

(73) Proprietor: **Koninklijke Philips Electronics N.V.
5621 BA Eindhoven (NL)**

(72) Inventor: **LANGELAAR, Gerrit, C.
NL-5656 AE Eindhoven (NL)**

(74) Representative: **Uittenbogaard, Frank
Philips
Intellectual Property & Standards
P.O. Box 220
5600 AE Eindhoven (NL)**

(56) References cited:
**EP-A- 0 735 754        WO-A-00/07367
DE-A1- 19 925 387       US-A- 5 999 688
US-B1- 6 449 021**

**Description**

FIELD OF THE INVENTION

The present invention relates to method and apparatus for detecting a transition between video segments. In particular, but not exclusively, it relates to detecting and verifying the transition (or boundary) between a program and a commercial block.

BACKGROUND OF THE INVENTION

Simple commercial detection algorithms, for example those using black-frame and audio pressure features to detect the transitions between a TV program and a commercial block are well known. It has been found that these are sometimes inaccurate, for example new items or program intros can be mistaken and merged into the commercials. Therefore, as well as the commercials, portions of the program may be skipped.

Many channels include a logo displayed in a corner of the screen during the TV program. These logos do not appear during commercials. Therefore, some known commercial block detectors use logo detection to establish a transition between the program and the commercial block. These have also proven to be inaccurate as logos are not always properly overlaid during live events, boundaries are not known, some channels do not use logos, transparent logos cannot be detected on a white background etc.

To improve the performance of such commercial block detectors some use logo presence detection is utilized to suppress for example black-frame or letterbox detections with logos on them. However, these cannot deal with improperly overlaid logos by broadcasters or misdetections of the logo itself.

Other prior art for commercial detection is US 6449021, EP 735754, WO 00/07367, and DE 19925387.

US 5,999,688 discloses a video recording device including video and audio event detectors. The outputs of the video and audio event detectors are interrogated by a commercial elimination microprocessor to build an event list that will be processed by a commercial detection algorithm. Special software operating in conjunction with digital event detection may be used to identify accurately the occurrence of silent frame and black frame events in fast scan modes. The software analyses integrated luminance values to recognise the characteristic pattern of noise bars in an otherwise black frame. For example, ten contiguous lines of black video may be required to declare a black band. If three such bands are observed sequentially, a video event is declared. An audio event must also be observed, although it may be skewed in time relative to the video event. If the audio detector finds a below-threshold (i.e. "silent") audio level within +/- 100 ms. of a video event, a valid event is declared.

SUMMARY OF THE INVENTION

The present invention seeks to provide a technique for accurately detecting and hence verifying the transition between video segments.

This is achieved according to a first aspect of the present invention by a method as defined in claim 1.

This is also achieved according to a second aspect of the present invention by an apparatus as defined in claim 11.

Certain methods either detect transitions in certain content very well or not well at all, e.g. logo detectors. By comparing the transitions detected with such a method with the transitions detected with another method, it can be determined whether it is advisable to use the second method to determine the final transitions or not.

In an embodiment of the present invention, the second detection method comprises a simple logo detector and with incorporation of a first detection method, the system can easily correct for improperly overlaid logos by broadcasters or misdetections of the logo detector. If the logo detections are reliable, the boundaries can be tuned using logo and other information from the first detection method to obtain more accurate boundaries.

Said final transition may be based solely or predominantly on said second transition, if said second method is determined to be reliable.

Said final transition may be determined by using said second transition to refine said first transition.

In an embodiment of the present invention, the second detection method is determined as reliable by comparing start and/or end times of the first and/or second video segments determined by the first and the second detection methods; determining a ratio of the differences between corresponding start and/or end times of the first and second video segments; and determining the second detection method reliable if the determined ratio of differences is below a threshold value.

Alternatively, the second detection method is determined as reliable by determining a ratio of a corrected duration of the first video segments detected by the second detection method over the total duration of the video stream of first and second video segments; and determining the second detection method reliable, if the determined ratio is above a second threshold value. Alternatively, the second detection method is determined as reliable by determining a ratio of a corrected duration of the first video segments detected by the second detection method over a duration of the corresponding first video segments detected by the first detection method; and determining the second detection method reliable, if the determined ratio is above a third threshold value.

Reliability of the second detection method may be determined by the any one of the above ratios or any combination thereof.

BRIEF DESCRIPTION OF DRAWINGS

For a more complete understanding of the present invention, reference is made to the following description in conjunction with the accompanying drawings, in which:

Fig. 1 is a simplified schematic of apparatus according to an embodiment of the present invention;
Fig. 2 is a flowchart of the comparator according to the embodiment of the present invention; and
Fig. 3(a), (b) and (c) are graphical representations of an example of the output of the detectors and comparator of the apparatus of Fig. 1.

DETAILED DESCRIPTION OF AN EMBODIMENT OF THE INVENTION

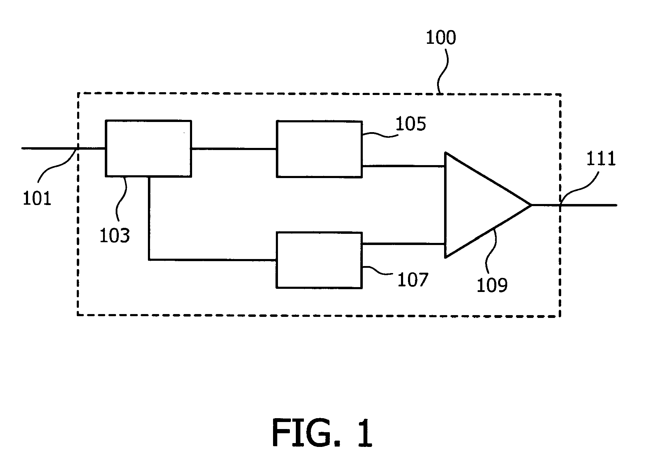

With reference to Fig. 1, the apparatus 100 comprises an input terminal 101 connected to the input of a demultiplexer 103. The outputs of the demultiplexer 103 are connected to a first detector 105 and a second detector 107. The outputs of the first and second detectors 105, 107 are connected to respective inputs of a comparator 109. The output of the comparator 109 is connected to an output terminal 111 of the apparatus 100. The outputs of the detectors 105, 107 may be stored in a memory device or database (not shown here) for later comparison and/or processing.

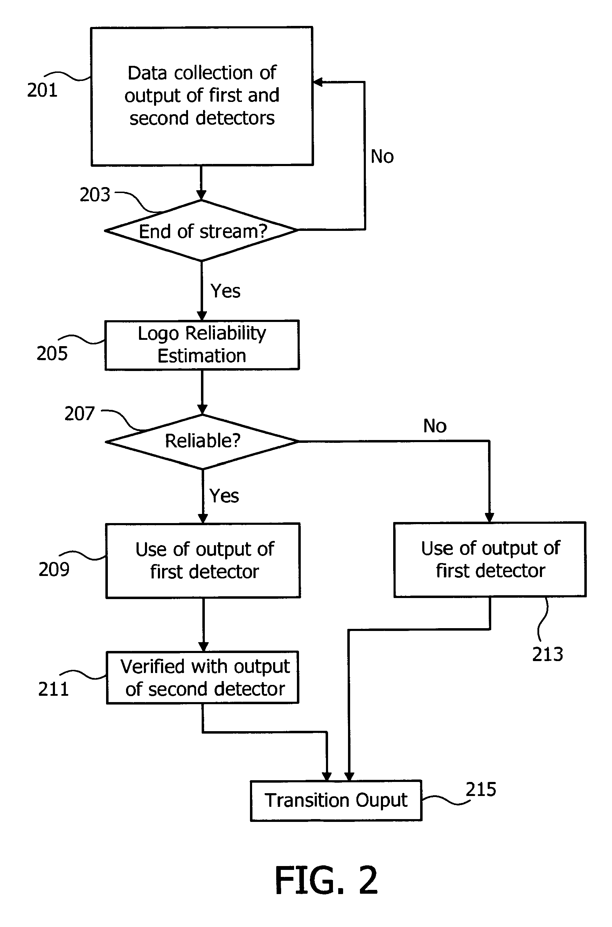

With reference to Fig. 2, operation of the apparatus will be described. An audiovisual data stream is provided on the input terminal 101 of the apparatus 100. The data stream is demultiplexed by the demultiplexer 103. The audio and/or video output is fed to a first detector 105. The first detector 105 may comprise an audio cut-silence detector in which case audio presentation time stamps and signal power of the audio are processed to provide audio feature data. Video feature data is also extracted. Transitions between a first video segment and a second video segment are detected on the basis of the extracted audio and video feature data. Other known techniques for detecting the transition can be utilized such as black-frame detection, letterbox change, monochrome frame, audio power drop etc. In this way the first detector 105 detects separation points based on black frames, audio drops etc.. These points can occur during a normal program as well as at the transition between the normal program and the commercial block. Therefore, in order to determine whether these separation points are in fact a transition between a normal program and a commercial block, a set of separation points have to meet certain requirements. The separation points of this set of points are merged and result in two transition points, the first and the last separation point of this set representing the start and end of a commercial block, i.e. the transition between the normal program and the commercial block. The first detector 105 generates a plurality of candidate transitions between video segments, i.e. transitions between programs and commercials, step 201, for the input data stream.

The second detector 107 receives the demultiplexed video presentation time stamps. The second detector 107 divides this into a plurality of frames. Each frame is analyzed to detect a graphical object such as a logo or recognized text or the like. The second detector 107 outputs a plurality of logo free episodes, namely an indication of the transition between appearance and/or disappearance of a graphic object (logo), step 201.

When the end of the data stream, step 203, is detected, the comparator combines the output of detector 105, 107 and generates a final list of the start and end times (transitions) of each video segment, i.e. commercial block start and end times.

This is achieved by estimating the reliability of the second detection detector 107, step 205. If the second detector is determined reliable, step 207, transitions found by the second detector 107 are processed and output, step 209, 211, 215 and combined with transitions detected by the first detector 105.

If the second detector 107 is determined unreliable, step 207, transitions found by the first detector 105 are processed only, step 213 and output, step 215.

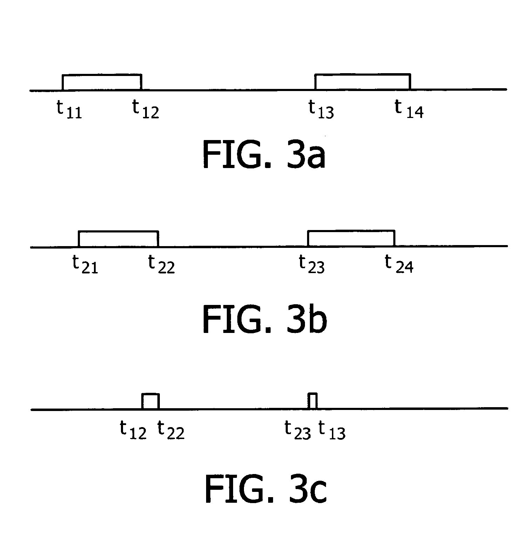

Determination of reliability of the second detector 107 will now be described in more detail with reference to Figs. 3(a), (b) and (c).

Fig. 3(a) is a graphical representation of the output of the first detector 105;
Fig. 3(b) is a graphical representation of the output of the second detector 107;
Fig. 3(c) is a graphical representation of a comparison of the output shown in Figs. 3(a) and 3(b).

As mentioned above, the comparator first checks whether the second detector 107 (logo detector) is reliable or not. In carrying out such a check, in the event that some broadcasters forget to overlay the logo after a commercial break, especially during live events, and in the event that some channels (almost) always overlay a logo, also during commercial breaks, the logo data is not useable for commercial block detections.

The transitions $t_{11}$, $t_{12}$, $t_{13}$, $t_{14}$, $t_{21}$, $t_{22}$, $t_{23}$, $t_{24}$ of Figs. 3(a) and 3(b) output by the first and second detectors 105, 107 are the transitions detected between the first and second video segments. For example, transitions $t_{11}$, $t_{13}$ represent the start of a commercial block detected by the first detector 105; transitions $t_{12}$, $t_{14}$ represent the end of commercial blocks detected by the first detector 105; transitions $t_{21}$, $t_{23}$ represent the start of a logo free episode detected by the second detector 107; and transitions $t_{22}$, $t_{24}$ represent the end of a logo free episode detected by the second detector 107.

The ratio between the duration of logo free episodes $t_{21}$ to $t_{22}$ and $t_{23}$ to $t_{24}$ outside the detected commercial blocks and the video duration is calculated as follows:

$$Ratio\_A = V1LogoFreeNoOverlap * 100\% / VideoDuration \qquad (1)$$

, i.e. the ratio of commercial blocks detected by the first detector having no overlap with that detected by the second (logo free episodes) over the duration of the video stream.

In general this ratio is small (<5%), since the logo normally disappears only 20 seconds before start of a commercial block and appears 20 seconds after the end of a commercial block. However, if the logo detector fails for short periods because of static content or "invisible transparent logos on a white background" this percentage can slightly be higher. If this ratio exceeds 15%, the broadcaster probably forgot to overlay the logos for a longer period.

Next, the ratio between the total duration of the corrected logo free episodes against the video duration is calculated:

$$Ratio\_B = CorrLogoFreeDuration * 100\% / VideoDuration \qquad (2)$$

wherein *CorrLogoFreeDuration* is the corrected logo free episode duration in which durations considered too short or too long are discarded.

If this ratio is very small (less than 3%), the logo is probably always visible, i.e. it is also visible on commercials. Or the recording/ broadcast do not contain any commercials.

The total duration of the corrected logo free episodes (second detector) against the total duration of the detections of the first detector is compared:

$$Ratio\_C = CorrLogoFreeDuration * 100\% / CBV1Duration \qquad (3)$$

wherein *CorrLogoFreeDuration* is the corrected logo free episode duration in which durations considered too short or too long are discarded and wherein *CBV1Duration* is the duration of the commercial block detected by the first detector (Fig. 3(a)).

If this ratio is less than 45%, the logo free episodes are significantly shorter than the commercial blocks detected by the first detector. This happens when logos are overlaid on some of the commercials, or commercials are interleaved with a lot of trailers with logos on them.

The Logo Free Episodes are therefore considered unreliable if:

$$(Ratio\_A > NOOVERLAPRATIO) \ OR \ (RATIO\_B <$$

$$VIDDURATIONRATIO) \ OR$$

$$(Ratio\_C < CBV1RATIO) \qquad (4)$$

where, in the particular example above, NOOVERLAPRATIO equals to 15%, VIDDURATIONRATIO equals to 3%, and CBV1RATIO equals to 45%. It can be appreciated that these threshold percentages are examples only and can be varied as appropriate. Otherwise the detected Logo Free Episodes are assumed to be reliable and used for fine-tuning the transitions detected by the first detector or at least to verify the transitions.

The candidate commercial blocks detected by the first detector may be used to verify the reliability of the logo detections. For example, the total duration of the logo free episodes against the total duration of the candidate commercial block detected by the first detector and / or compare the program duration against the total duration of the episodes where there is no overlap between a logo free episode and the candidate commercial blocks detected by the first detector.

If the logo detections of the second detector are considered not reliable, the candidate commercial blocks detected by the first detector become the final transition and output of the apparatus. If the logo detections of the second detector are considered reliable, the transitions detected by the first detector are tuned using the logo detection of the second detector.

Although an embodiment of the present invention has been illustrated in the accompanying drawings and described in the foregoing detailed description, it will be understood that the invention is not limited to the embodiment disclosed, but is capable of numerous modifications without departing from the scope of the invention as set out in the following claims. The invention resides in each and every novel characteristic feature and each and every combination of characteristic features. Reference numerals in the claims do not limit their protective scope. Use of the verb "to comprise" and its conjugations does not exclude the presence of elements other than those stated in the claims. Use of the article "a" or "an" preceding an element does not exclude the presence of a plurality of such elements.

'Means', as will be apparent to a person skilled in the art, are meant to include any hardware (such as separate or integrated circuits or electronic elements) or software (such as programs or parts of programs) which reproduce in operation or are designed to reproduce a specified function, be it solely or in conjunction with other functions, be it in isolation or in co-operation with other elements. The invention can be implemented by means of hardware comprising several distinct elements, and by means of a suitably programmed computer. In the apparatus claim enumerating several means, several of these means can be embodied by one and the same item of hardware. 'Computer program product' is to be understood to mean any software product stored on a computer-readable medium, such as a floppy disk, downloadable via a network, such as the Internet, or marketable in any other manner.

## Claims

1. A method for detecting a transition between a first video segment and a second video segment, the method comprising the steps (205-213) of:

   detecting a first transition between a first video segment and a second video segment by a first detection method;
   detecting a second transition between said first video segment and said second video segment by a second detection method, said first detection method being different from said second detection method; and
   determining whether said second method is reliable by comparing said first transition with said second transition, **characterised by**
   using at least said second transition to determine a final transition, if said second method is determined to be reliable, and only using the first but not using the second of the first and second transitions to determine said final transition, if said second method is determined to be unreliable.

2. A method according to claim 1, wherein said final transition is based solely or predominantly on said second transition, if said second method is determined to be reliable.

3. A method according to claim 2, wherein said final transition is determined by using said second transition to refine said first transition.

4. A method according to claim 1, wherein said second detection method comprises the step of detecting said transition between a first video segment and a second video segment upon detection of a predetermined item.

5. A method according to claim 4, wherein said predetermined item is a graphical object.

6. A method according to claim 1, wherein said first detection method generates a first set of a plurality of candidate first video segments; and said second detection method generates a second set of a plurality of candidate first video segments.

7. A method according to claim 6, wherein the step of determining the reliability of said second detection method comprises the steps of:

comparing start and/or end times of said first and/or second video segments determined by said first and said second detection methods;

determining a ratio of the differences between corresponding said start and/or end times of said first and second video segments;

determining said second detection method reliable if said determined ratio of differences is below a first threshold value.

8. A method according to claim 6 or 7, wherein the step of determining the reliability of said second detection method comprises the steps of:

determining a ratio of a corrected duration of said first video segments detected by said second detection method over a total duration of a video stream of said first and second video segments; and

determining said second detection method reliable, if said determined ratio is above a second threshold value.

9. A method according to any one of claims 6 to 8, wherein the step of determining the reliability of said second detection method comprises the steps of:

determining a ratio of a corrected duration of said first video segments detected by said second detection method over a duration of said corresponding first video segments detected by said first detection method; and

determining said second detection method reliable, if said determined ratio is above a third threshold value.

10. A computer program product comprising a plurality of program code portions for carrying out the method according to any one of the preceding claims.

11. Apparatus for detecting a transition between a first video segment and a second video segment, the apparatus comprising:

a first detector (105) for detecting a first transition between a first video segment and a second video segment;

a second detector (107) for detecting a second transition between said first video segment and said second video segment, said first detector being different from said second detector; and

a comparator (109) for determining whether said second method is reliable by comparing said first transition with said second transition, **characterised in that** the apparatus is arranged to use at least said second transition to determine a final transition, if said second method is determined to be reliable, and only process transitions found by the first of the first and second detectors but not using said second transition to determine said final transition, if said second method is determined to be unreliable.

12. Apparatus according to claim 11, wherein said second detector (107) comprises means for detecting said transition between a first video segment and a second video segment upon detection of a predetermined item.

13. Apparatus according to claim 11, wherein said comparator (109) determines said final transition based solely or predominantly on said second transition, if said second method is determined to be reliable.

14. Apparatus according to claim 13, wherein said comparator (109) determines said final transition by using said second transition to refine said first transition.

**Patentansprüche**

1. Verfahren zum Detektieren eines Übergangs zwischen einem ersten Videosegment und einem zweiten Videosegment, wobei das Verfahren die folgenden Schritte (205-213) umfasst:

Detektieren eines ersten Übergangs zwischen einem ersten Videosegment und einem zweiten Videosegment mit Hilfe eines ersten Detektionsverfahrens;

Detektieren eines zweiten Übergangs zwischen dem ersten Videosegment und dem zweiten Videosegment mit Hilfe eines zweiten Detektionsverfahrens, wobei sich das erste Detektionsverfahren von dem zweiten Detektionsverfahren unterscheidet; sowie

Ermitteln, ob das zweite Detektionsverfahren zuverlässig ist, indem der erste Übergang mit dem zweiten Übergang verglichen wird, **dadurch gekennzeichnet, dass**
zumindest der zweite Übergang zum Ermitteln eines endgültigen Übergangs verwendet wird, wenn sich das zweite Verfahren als zuverlässig erweist, und dass nur der erste, nicht jedoch der zweite Übergang des ersten und zweiten Übergangs verwendet wird, um den endgültigen Übergang zu ermitteln, wenn sich das zweite Verfahren als unzuverlässig erweist.

2. Verfahren nach Anspruch 1, wobei der endgültige Übergang ausschließlich oder überwiegend auf dem zweiten Übergang basiert, wenn das zweite Verfahren als zuverlässig ermittelt wird.

3. Verfahren nach Anspruch 2, wobei der endgültige Übergang durch Verwenden des zweiten Übergangs zwecks Verfeinerns des ersten Übergangs ermittelt wird.

4. Verfahren nach Anspruch 1, wobei das zweite Detektionsverfahren den Schritt des Detektierens des Übergangs zwischen einem ersten Videosegment und einem zweiten Videosegment bei Detektieren eines vorgegebenen Items umfasst.

5. Verfahren nach Anspruch 4, wobei es sich bei dem vorgegebenen Item um ein grafisches Objekt handelt.

6. Verfahren nach Anspruch 1, wobei das erste Detektionsverfahren einen ersten Satz von mehreren ersten Candidate-Videosegmenten erzeugt, und wobei das zweite Dektionsverfahren einen zweiten Satz von mehreren ersten Candidate-Videosegmenten erzeugt.

7. Verfahren nach Anspruch 6, wobei der Schritt des Ermittelns der Zuverlässigkeit des zweiten Detektionsverfahrens die folgenden Schritte umfasst:

Vergleichen des Start- und/oder Endzeitpunkts des durch das erste und das zweite Detektionsverfahren ermittelten ersten und/oder zweiten Videosegments;
Ermitteln eines Verhältnisses der Differenzen zwischen dem entsprechenden Start- und/oder Endzeitpunkt des ersten und zweiten Videosegments;
Ermitteln, dass das zweite Detektionsverfahren zuverlässig ist, wenn das ermittelte Verhältnis der Differenzen unterhalb eines ersten Schwellwertes liegt.

8. Verfahren nach Anspruch 6 oder 7, wobei der Schritt des Ermittelns der Zuverlässigkeit des zweiten Detektionsverfahrens die folgenden Schritte umfasst:

Ermitteln eines Verhältnisses einer mit Hilfe des zweiten Detektionsverfahrens detektierten, korrigierten Dauer der ersten Videosegmente über eine Gesamtdauer eines Videostroms der ersten und zweiten Videosegmente; sowie
Ermitteln, dass das zweite Detektionsverfahren zuverlässig ist, wenn das ermittelte Verhältnis oberhalb eines zweiten Schwellwertes liegt.

9. Verfahren nach einem der Ansprüche 6 bis 8, wobei der Schritt des Ermittelns der Zuverlässigkeit des zweiten Detektionsverfahrens die folgenden Schritte umfasst:

Ermitteln eines Verhältnisses einer mit Hilfe des zweiten Detektionsverfahrens detektierten, korrigierten Dauer der ersten Videosegmente über eine mit Hilfe des ersten Detektionsverfahrens detektierte Dauer der entsprechenden ersten Videosegmente; sowie
Ermitteln, dass das zweite Detektionsverfahren zuverlässig ist, wenn das ermittelte Verhältnis oberhalb eines dritten Schwellwertes liegt.

10. Computerprogrammprodukt mit mehreren Programmcodeteilen zur Ausführung des Verfahrens nach einem der vorangegangenen Ansprüche.

11. Vorrichtung zum Detektieren eines Übergangs zwischen einem ersten Videosegment und einem zweiten Videosegment, wobei die Vorrichtung umfasst:

einen ersten Detektor (105) zum Detektieren eines ersten Übergangs zwischen einem ersten Videosegment und einem zweiten Videosegment;
einen zweiten Detektor (107) zum Detektieren eines zweiten Übergangs zwischen dem ersten Videosegment und dem zweiten Videosegment, wobei sich der erste Detektor von dem zweiten Detektor unterscheidet; sowie einen Komparator (109), um durch Vergleichen des ersten Übergangs mit dem zweiten Übergang zu ermitteln, ob das zweite Verfahren zuverlässig ist, **dadurch gekennzeichnet, dass** die Vorrichtung angeordnet ist, um, wenn sich das zweite Verfahren als zuverlässig erweist, zumindest den zweiten Übergang zum Ermitteln eines endgültigen Übergangs sowie ausschließlich von dem ersten des ersten und zweiten Detektors ermittelte Prozessübergänge zu verwenden, den zweiten Übergang jedoch nicht zum Ermitteln des endgültigen Übergangs einzusetzen, wenn sich das zweite Verfahren als unzuverlässig erweist.

**12.** Vorrichtung nach Anspruch 11, wobei der zweite Detektor (107) Mittel umfasst, um bei Detektieren eines vorgegebenen Items den Übergang zwischen einem ersten Videosegment und einem zweiten Videosegment zu detektieren.

**13.** Vorrichtung nach Anspruch 11, wobei der Komparator (109) den endgültigen Übergang ausschließlich oder überwiegend aufgrund des zweiten Übergangs ermittelt, wenn sich das zweite Verfahren als zuverlässig erweist.

**14.** Vorrichtung nach Anspruch 13, wobei der Komparator (109) den endgültigen Übergang durch Verwenden des zweiten Übergangs zwecks Verfeinerns des ersten Übergangs ermittelt.

## Revendications

**1.** Procédé pour détecter une transition entre un premier segment vidéo et un second segment vidéo, le procédé comprenant les étapes (205 à 213) consistant à :

détecter une première transition entre un premier segment vidéo et un second segment vidéo par l'intermédiaire d'un premier procédé de détection ;
détecter une seconde transition entre ledit premier segment vidéo et ledit second segment vidéo par l'intermédiaire d'un second procédé de détection, ledit premier procédé de détection étant différent dudit second procédé de détection ; et
déterminer si ledit second procédé est fiable en comparant ladite première transition à ladite seconde transition, **caractérisé par** l'étape consistant à :

utiliser au moins ladite seconde transition pour déterminer une transition finale, s'il est déterminé que ledit second procédé est fiable, et seulement utiliser la première transition mais ne pas utiliser la seconde transition des première et seconde transitions pour déterminer ladite transition finale, s'il est déterminé que ledit second procédé n'est pas fiable.

**2.** Procédé selon la revendication 1, dans lequel ladite transition finale est fondée uniquement ou essentiellement sur ladite seconde transition, s'il est déterminé que ledit second procédé est fiable.

**3.** Procédé selon la revendication 2, dans lequel ladite transition finale est déterminée en utilisant ladite seconde transition pour affiner ladite première transition.

**4.** Procédé selon la revendication 1, dans lequel ledit second procédé de détection comprend l'étape consistant à détecter ladite transition entre un premier segment vidéo et un second segment vidéo lors de la détection d'un article prédéterminé.

**5.** Procédé selon la revendication 4, dans lequel ledit article prédéterminé est un objet graphique.

**6.** Procédé selon la revendication 1, dans lequel ledit premier procédé de détection produit un premier jeu d'une pluralité de premiers segments vidéo candidats ; et ledit second procédé de détection produit un second jeu d'une pluralité de premiers segments vidéo candidats.

**7.** Procédé selon la revendication 6, dans lequel l'étape consistant à déterminer la fiabilité dudit second procédé de détection comprend les étapes consistant à :

comparer des temps de commencement et/ou de fin desdits premier et/ou second segments vidéo déterminés par lesdits premier et/ou second procédés de détection ;
déterminer un rapport des différences entre lesdits temps correspondants de commencement et/ou de fin desdits premier et second segments vidéo ;
déterminer ledit second procédé de détection fiable si ledit rapport déterminé de différences est inférieur à une première valeur de seuil.

8. Procédé selon la revendication 6 ou 7, dans lequel l'étape consistant à déterminer la fiabilité dudit second procédé de détection comprend les étapes consistant à :

   déterminer un rapport d'une durée corrigée desdits premiers segments vidéo détectés par ledit second procédé de détection par rapport à une durée totale d'un flux vidéo desdits premier et second segments vidéo ; et
   déterminer ledit second procédé de détection fiable, si ledit rapport déterminé est supérieur à une deuxième valeur de seuil.

9. Procédé selon une quelconque des revendications 6 à 8, dans lequel l'étape consistant à déterminer la fiabilité dudit second procédé de détection comprend les étapes consistant à :

   déterminer un rapport d'une durée corrigée desdits premiers segments vidéo détectés par ledit second procédé de détection par rapport à une durée desdits premiers segments vidéo correspondants détectés par ledit premier procédé de détection ; et
   déterminer ledit second procédé de détection fiable, si ledit rapport déterminé est supérieur à une troisième valeur de seuil.

10. Produit programme informatique comprenant une pluralité de parties de code de programme pour réaliser le procédé selon une quelconque des revendications précédentes.

11. Appareil pour détecter une transition entre un premier segment vidéo et un second segment vidéo, l'appareil comprenant :

   un premier détecteur (105) pour détecter une première transition entre un premier segment vidéo et un second segment vidéo ;
   un second détecteur (107) pour détecter une seconde transition entre ledit premier segment vidéo et ledit second segment vidéo, ledit premier détecteur étant différent dudit second détecteur ; et
   un comparateur (109) pour déterminer si ledit second procédé est fiable en comparant ladite première transition à ladite seconde transition, **caractérisé en ce que** l'appareil est agencé pour utiliser au moins ladite seconde transition pour déterminer une transition finale s'il est déterminé que ledit second procédé est fiable et seulement traiter des transitions trouvées par le premier détecteur des premier et second détecteurs mais ne pas utiliser ladite seconde transition pour déterminer ladite transition finale s'il est déterminé que ledit second procédé n'est pas fiable.

12. Appareil selon la revendication 11, dans lequel ledit second détecteur (107) comprend des moyens pour détecter ladite transition entre un premier segment vidéo et un second segment vidéo lors de la détection d'un article prédéterminé.

13. Appareil selon la revendication 11, dans lequel ledit comparateur (109) détermine ladite transition finale uniquement ou essentiellement sur la base de ladite seconde transition, s'il est déterminé que ledit second procédé est fiable.

14. Appareil selon la revendication 13, dans lequel ledit comparateur (109) détermine ladite transition finale en utilisant ladite seconde transition pour affiner ladite première transition.

FIG. 1

201 — Data collection of output of first and second detectors

203 — End of stream?

No

Yes

205 — Logo Reliability Estimation

207 — Reliable?

No

Yes

209 — Use of output of first detector

213 — Use of output of first detector

211 — Verified with output of second detector

215 — Transition Ouput

# FIG. 2

$t_{11}$     $t_{12}$                    $t_{13}$     $t_{14}$

## FIG. 3a

$t_{21}$     $t_{22}$                    $t_{23}$     $t_{24}$

## FIG. 3b

$t_{12}$ $t_{22}$                $t_{23}$ $t_{13}$

## FIG. 3c

**EP 2 147 546 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6449021 B
- EP 735754 A
- WO 0007367 A
- DE 19925387
- US 5999688 A